(19) Europäisches Patentamt
European Patent Office
Office européen des brevets

(11) **EP 3 797 234 B1**

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **19742716.4**

(22) Anmeldetag: **18.07.2019**

(51) Internationale Patentklassifikation (IPC):
**F16J 9/20** (2006.01)

(52) Gemeinsame Patentklassifikation (CPC):
**F16J 9/20; F16J 9/203**

(86) Internationale Anmeldenummer:
**PCT/EP2019/069314**

(87) Internationale Veröffentlichungsnummer:
**WO 2020/035252 (20.02.2020 Gazette 2020/08)**

(54) **ABSTREIFRING FÜR EINEN DREITEILIGEN ÖLABSTREIFRING UND DREITEILIGER ÖLABSTREIFRING**

SCRAPER RING FOR A THREE-PART OIL SCRAPER RING AND THREE-PART OIL SCRAPER RING

SEGMENT RACLEUR POUR UN SEGMENT RACLEUR D'HUILE EN TROIS PARTIES ET SEGMENT RACLEUR D'HUILE EN TROIS PARTIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2018 DE 102018119586**

(43) Veröffentlichungstag der Anmeldung:
**31.03.2021 Patentblatt 2021/13**

(73) Patentinhaber: **Federal-Mogul Burscheid GmbH 51399 Burscheid (DE)**

(72) Erfinder:
• **BÄRENREUTER, Dirk**
 **51519 Odenthal (DE)**
• **GILLEN, Jürgen**
 **51371 Leverkusen (DE)**

(74) Vertreter: **Kurig, Thomas Becker Kurig & Partner Patentanwälte mbB Bavariastraße 7 80336 München (DE)**

(56) Entgegenhaltungen:
DE-A1- 3 833 322 JP-A1-WO2016 038 916
JP-B1- 6 251 850 JP-U- S5 962 358
US-A- 2 712 971

**Beschreibung**

Die vorliegende Erfindung betrifft eine Rail bzw. einen Abstreifring für einen dreiteiligen Ölabstreifring sowie einen Ölabstreifring mit einer derartigen Rail.

Ölabstreifringe sind seit längerem bekannt, wobei verschiedene Bauformen verwendet werden. Beispielsweise sind einteilige Ölabstreifringe mit zwei Abstreifstegen und Radialöffnungen in dem Ring zwischen den Abstreifstegen bekannt. Einteilige Ölabstreifringe werden oft auch zusammen mit Expanderfedern eingesetzt, um über den gesamten Umfang eine möglichst gleichmäßige Anlagekraft und damit auch eine möglichst gleichmäßige Abstreifwirkung zu erzielen. Es sind ebenfalls sogenannte dreiteilige Ölabstreifringe bekannt, bei denen zwei im Wesentlichen scheibenförmige bzw. flache Abstreifringe bzw. Rails von einer Feder in Axialrichtung beabstandet gehalten werden, um in Radialrichtung nach außen gedrückt zu werden.

Olabstreifringe in verschiedenen Ausführungen sind bereits aus den Patentdokumenten DE3833322, US2712971, JPWO2016038916, JPS5962358U, JP6251850B,

US2016/0076649A1, US2017/0184198A1, EP3270012A1, DE112015001071T5 sowie JP H08-159282A bekannt.

Es gibt viele Parameter an einem Ölabstreifring, die die Abstreifeigenschaften beeinflussen. Um das Abstreifverhalten zu verbessern, ist es unter anderem notwendig, das Öl in Richtung des Ölabstreifkolbenring-Nutgrundes zu befördern. Diesem Aspekt wurde bisher nur durch verschiedene Schlitze und Öffnungen zwischen den üblicherweise zwei Abstreifstegen eines Ölabstreifrings Rechnung getragen.

Es ist wünschenswert, die Abstreifeigenschaften von Ölabstreifringen weiter zu verbessern. Die vorliegende Erfindung stellt einen mehrteiligen Ölabstreifring mit den Merkmalen von Anspruch 1 bereit. Vorteilhafte Ausführungen sind in den abhängigen Ansprüchen beschrieben.

Die Erfindung stellt einen dreiteiligen Ölabstreifring bereit. Der Abstreifring umfasst zwei Ringkörper mit einer oberen Flanke, einer unteren Flanke einer Ringinnenfläche und einer Ringaußenfläche und eine Expanderfeder. Die obere Flanke oder Abstreifringflanke soll dabei an einer Kolbenringnutflanke oder an einer Feder eines dreiteiligen Ölabstreifrings jeweils in Axialrichtung anliegen. Die untere Flanke bzw. Abstreifringflanke soll dabei an einer Kolbenringnutflanke oder an einer Feder eines dreiteiligen Ölabstreifrings jeweils in Axialrichtung anliegen. Die Ringinnenfläche ist dazu bestimmt, an einer Feder bzw. einem Expander eines dreiteiligen Ölabstreifrings in Radialrichtung anzuliegen.

Die Ringaußenfläche, weist in einem Schnitt in Axialrichtung, der durch die Achse der Rotationssymmetrie verlaufen soll, eine Ringaußenkontur auf.

Der Ringkörper weist eine Höhe H auf, die dem größten Abstand der oberen Flankenfläche zu der unteren Flankenfläche entspricht.

Die Ringaußenfläche bildet eine Lauffläche, wobei die Ringaußenkontur einen Krümmungsradius R aufweist, der um einen Faktor zwischen 1,5 bis 6, bevorzugt zwischen 3 bis 5 mal und weiter bevorzugt zwischen 3,5 bis 4,5 kleiner ist als die Höhe H des Abstreifrings.

Wie alle Kolbenringe, Abstreifringe und Ölabstreifringe umfasst der Ringkörper ebenfalls einen Ringstoß.

Der Abstreifring ist insbesondere dadurch gekennzeichnet, dass er in dem Bereich in dem er mit einer Zylinderinnenfläche in Kontakt steht, einen deutlich kleineren Krümmungsradius aufweist als die halbe Höhe des Abstreifrings. Dieser Aspekt der vorliegenden Erfindung betrifft insbesondere nur den Abstreifring eines dreiteiligen Ölabstreifrings.

Bei einer beispielhaften Ausführungsform ist der Abstreifring gegenüber einer Ebene symmetrisch, die sich entlang der halben Höhe H des Abstreifrings erstreckt.

In einer beispielhaften Ausführungsform des Abstreifrings beträgt die Höhe H des Abstreifrings zwischen 0,28 mm und 0,52 mm, bevorzugt zwischen 0,34 mm und 0,46 mm und weiter bevorzugt zwischen 0,38 und 0,42mm. Es werden auch beispielhafte Ausführungsformen mit einem Krümmungsradius R der Lauffläche zwischen 0,06mm und 0,04mm, bevorzugt zwischen 0,08mm und 0,12mm und weiter bevorzugt zwischen 0,09mm und 0,11mm offenbart.

In einer anderen beispielhaften Ausführungsform des Abstreifrings beträgt die Höhe H des Abstreifrings zwischen 0,28 mm und 0,52 mm und der Krümmungsradius R der Lauffläche beträgt zwischen 0,06mm und 0,04mm. Bei einer weiteren beispielhaften Ausführungsform des Abstreifrings beträgt die Höhe H des Abstreifrings zwischen 0,34 mm und 0,46 mm, der Krümmungsradius R der Lauffläche beträgt 0,08mm und 0,12mm. In einer zusätzlichen beispielhaften Ausführungsform des Abstreifrings beträgt die Höhe H des Abstreifrings zwischen 0,38 und 0,42mm und der Krümmungsradius R der Lauffläche beträgt zwischen 0,09mm und 0,11mm.

Bei einer anderen beispielhaften Ausführungsform des Abstreifrings befindet sich eine radial äußerste Stelle der Ringaußenkontur der Lauffläche auf der halben Höhe H/2 des Abstreifrings. Hier ist der Abstreifring so gestaltet, dass er in Axialrichtung gesehen eine Zylinderinnenfläche mittig berührt. Hier zeigt der Abstreifring keine Twistneigung.

Bei einer weiteren beispielhaften Ausführungsform des Abstreifrings ist ein Übergang zwischen der Krümmung mit dem Krümmungsradius R und der unteren Flanke vorgesehen ist. Der Übergang ist hier im Querschnitt konvex ausgeführt und geht stetig und glatt in die Krümmung R über. Dadurch soll nicht abgestreiftes Öl, das den Spalt zwischen Zylinderinnenwand und der Lauffläche mit dem Radius R passiert hat, an der Lauffläche des Abstreifrings anhaftend, an der Rückseite der Krümmung R nach innen in Richtung Nutgrund abgelenkt werden. Dies funktioniert besonders gut bei dem oberen Abstreifring eines dreiteiligen Ölabstreifring bei einer Aufwärtsbewegung des Kolbens

Bei einer weiteren beispielhaften Ausführungsform des Abstreifrings ist ein Übergang zwischen der Krümmung R und der oberen Flanke vorgesehen, wobei der Querschnitt konvex ausgeführt ist und stetig und glatt in die Krümmung R übergeht. Auch hier soll nicht abgestreiftes Öl, das den Spalt zwischen Zylinderinnenwand und der Lauffläche mit dem Radius R passiert hat an der Lauffläche anhaftend an der Rückseite der Krümmung R nach innen in Richtung Nutgrund abgelenkt wird. Dies funktioniert besonders gut bei dem unteren Abstreifring eines dreiteiligen Ölabstreifring bei einer Abwärtsbewegung des Kolbens.

Bei einer zusätzlichen beispielhaften Ausführungsform des Abstreifrings weist ein Übergang zwischen der Krümmung R und der unteren Flanke einen Übergangs-Krümmungsradius Ru auf, der zwischen einmal der Höhe H und 40 mal der Höhe H, bevorzugt zwischen zweimal der Höhe H und 20 mal der Höhe H und weiter bevorzugt zwischen 4 mal der Höhe H und 10 mal der Höhe H beträgt. Ist die Ausführung symmetrisch, betrifft diese Ausführung auch den Übergang zwischen der Krümmung R und der oberen Flanke. In dieser Ausführung kann ein kleinerer Verrundungsradius zwischen dem Übergangsbereich und der oberen Flanke bestehen.

Bei einer anderen beispielhaften Ausführungsform des Abstreifrings erstreckt sich die Ringaußenfläche in radialer Richtung über einen Bereich, der von 1/5 der Höhe H und 4/5 der Höhe H, bevorzugt zwischen 1/4 der Höhe H und 3/4 der Höhe H und weiter bevorzugt zwischen 1/3 der Höhe H und 1/2 der Höhe H beträgt. Die Breite eines verjüngten Bereichs des Abstreifrings an der Außenseite bzw. Lauffläche erstreckt sich dabei nicht soweit wie der Ring hoch ist.

Bei einer weiteren beispielhaften Ausführungsform des Abstreifrings ist ein Übergang zwischen der Krümmung R und der unteren Flanke als Spiralkurve, bevorzugt als hyperbolische Spiralkurve ausgeführt. Die Spiralkurve ist bevorzugt im Querschnitt konvex ausgeführt ist und geht stetig und glatt in die Krümmung R und in die Flankenfläche über. Hier wird eine verbesserte Umlenkung von Öl in Richtung des Nutgrundes erwartet, da die allmähliche Änderung des Krümmungsradius in der Spiralkurve es ermöglicht, dass daran entlangströmendes Öl besser in Richtung des Nutgrundes abgelenkt wird.

Bei einer symmetrischen Ausführung betrifft dies auch den Übergang zwischen der Krümmung R und der oberen Flanke, der dann ebenfalls einer Spiralkurve folgt.

Bei einer zusätzlichen beispielhaften Ausführungsform des Abstreifrings ist der Abstreifring ein oberer Abstreifring eines dreiteiligen Kolbenrings ist.

Gemäß eines weiteren Aspekts wird eine beispielhafte Ausführungsform eines Abstreifrings beansprucht, wobei sich eine radial äußerste Stelle der Ringaußenkontur der Lauffläche auf der Höhe des Abstreifrings befindet, die dem Wert R des Krümmungsradius der Lauffläche entspricht, und wobei bevorzugt der Radius R der Lauffläche stetig und glatt in die untere Flanke übergeht.

Der Krümmungsradius geht hier im Querschnitt direkt in die entere Flanke über, da der Kreis, der durch den Krümmungsradius R definiert ist, tangential zu der unteren Flanke liegt (wenn im Querschnitt betrachtet).

Bei einer anderen beispielhaften Ausführungsform des Abstreifrings geht im Querschnitt die obere Flanke an einem äußeren Rand stetig und glatt in die Krümmung Ro über, die kleiner ist als die Krümmung R der Lauffläche, wobei die Krümmungsradien R und Ro durch eine gemeinsame Tangente verbunden sind. Die beiden Krümmungsradien und die Tangente bilden zusammen die Ringaußenfläche. Die Tangente bildet bei dem fertigen Ring eine Kegelstumpffläche sie sich nach oben hin verjüngt. Der obere und untere Krümmungsradius bilden jeweils Teilflächen von Toren.

Bei einer weiteren beispielhaften Ausführungsform des Abstreifrings liegen im Querschnitt die Mittelpunkte der Krümmungsradien R und Ro auf einer geraden, die parallel zu einer Axialrichtung des Abstreifrings liegt.

Damit ergeben sich zwei Teilkreise mit den Radien R und Ro, die durch eine Tangentenstrecke miteinander verbunden sind. Die Teilkreise mit den Radien R und Ro weisen insgesamt einen Winkel von 180° auf. Der Teilkreis mit dem Radius R erstreckt sich über einen Winkelbereich von mehr als 90°. Der Teilkreis mit dem Radius R erstreckt sich bevorzugt über einen Winkelbereich zwischen 95° und 115°, bevorzugt über einen Winkelbereich zwischen 98° und 110°, und weiter bevorzugt über einen Winkelbereich zwischen 100° und 105°. Der Teilkreis mit dem Radius Ro erstreckt sich über einen Winkelbereich von weniger als 90°. Der Teilkreis mit dem Radius R0 erstreckt sich bevorzugt über einen Winkelbereich zwischen 65° und 85°, bevorzugt über einen Winkelbereich zwischen 70° und 82°, und weiter bevorzugt über einen Winkelbereich zwischen 75° und 80°.

Im Querschnitt ist hier die Tangentenstrecke als die Wurzel der Summe des Quadrats der Differenz der Radien R und Ro und des Quadrats der Differenz der Summe der Radien und der Höhe H bestimmt.

$$l = \sqrt{(R-Ro)^2 + [H-(R+Ro)]^2}$$

Die Winkel der Kegelfläche, die durch eine Rotation der die Tangentenstrecke um eine Axialachse des Abstreifrings erzeugt wird, beträgt dabei zwischen 5° und 25°, bevorzugt über einen Winkelbereich zwischen 8° und 20°, und weiter bevorzugt über einen Winkelbereich zwischen 10° und 15°.

Die obere Ringflanke geht bei dieser Ausführung glatt und stetig in die Krümmung Ro über, die wiederum glatt und stetig in die Tangentenstrecke übergeht, die wiederum glatt und stetig in die Krümmung R der Lauffläche übergeht, die dann schließlich glatt und stetig in die untere Flanke übergeht. Die beiden Krümmungsradien und die Tangente bilden zusammen die Ringaußenfläche. Die Tangente bildet bei dem fertigen Ring eine Kegelstumpffläche, die sich nach oben hin verjüngt.

Bei einer weiteren beispielhaften Ausführungsform des Abstreifrings befindet sich eine radial äußerste Stelle der Ringaußenkontur der Lauffläche auf Höhe R des Abstreifrings gemessen von der unteren Ringflanke, und weiterhin sind jeweils die Übergänge zwischen der unteren Ringflanke, der Krümmung R der Tangentenstrecke dem Krümmungsradius Ro sowie der oberen Flanke stetig und glatt ausgeführt. Die radial äußere Fläche setzt sich im Schnitt aus zwei Kreisbögen und einer Strecke zusammen, wobei keine Kanten auftreten.

Die Ringaußenfläche weist bevorzugt eine axiale Erstreckung von R, dem unteren Krümmungsradius R der Lauffläche auf.

Bei einer anderen beispielhaften Ausführungsform des Abstreifrings ist der Abstreifring ein oberer Abstreifring eines dreiteiligen Kolbenrings. Gerade die Form des Abstreifrings gestattet es, dass der Abstreifring bei einer Bewegung des Kolbens nach oben besonders gut auf einer Ölschicht aufschwimmen kann.

Gemäß eines weiteren Aspekts wird eine beispielhafte Ausführungsform eines Abstreifrings für einen dreiteiligen Ölabstreifring bereitgestellt, wobei der Krümmungsradius den Wert R aufweist, der um einen Faktor zwischen 1,5 bis 4, bevorzugt zwischen 1,8 bis 3 mal und weiter bevorzugt zwischen 2 bis 2,5 kleiner ist als die Höhe H des Abstreifrings. Diese Ausführung betrifft einen Abstreifring mit einem relativ großen Krümmungsradius R.

Bei einer anderen beispielhaften Ausführungsform des Abstreifrings beträgt der Krümmungsradius R zwischen 0,03 und 0,2mm bevorzugt zwischen 0,04 und 0,15mm und weiter bevorzugt zwischen 0,05 und 0,10mm, und eine Höhe H des Abstreifrings beträgt zwischen 0,2 und 0,8mm, bevorzugt zwischen 0,25 und 0,15mm und weiter bevorzugt zwischen 0,3 und 0,5mm.

Bei einer weiteren beispielhaften Ausführungsform des Abstreifrings beträgt der Krümmungsradius R zwischen 0,03 und 0,2mm, und eine Höhe H des Abstreifrings beträgt zwischen 0,2 und 0,8mm. Bei einer zusätzlichen beispielhaften Ausführungsform des Abstreifrings beträgt der Krümmungsradius R zwischen 0,04 und 0,15mm, und eine Höhe H des Abstreifrings beträgt zwischen 0,25 und 0,15mm. Bei einer anderen beispielhaften Ausführungsform des Abstreifrings beträgt der Krümmungsradius R zwischen 0,05 und 0,10mm, und eine Höhe H des Abstreifrings beträgt zwischen 0,3 und 0,5mm. Diese Kombinationen werden als besonders aussichtreich für ein gutes Abstreifergebnis angesehen.

Bei einer weiteren beispielhaften Ausführungsform des Abstreifrings befindet sich eine radial äußerste Stelle der Ringaußenkontur der Lauffläche zwischen 55 und 80%, bevorzugt zwischen 50 und 75% und weiter bevorzugt zwischen 65 und 70% der Höhe H des Abstreifrings. Der Abstreifring drückt also an einer Stelle gegen die Zylinderinnenfläche, die oberhalb der Mitte des Abstreifrings liegt. Diese bewirkt ein Twisten des Abstreifrings.

Bei einer zusätzlichen beispielhaften Ausführungsform des Abstreifrings ist jeweils ein unterer und ein oberer Übergang zwischen der Krümmung R und der unteren Flanke bzw. der oberen Flanke vorgesehen ist, die im Schnitt jeweils Tangenten an der Krümmung R bilden, und die sich in Bezug auf eine Radialebene jeweils in einem Winkel zwischen 30° und 75° in Richtung der oberen bzw. der unteren Flanke erstrecken.

Die Übergänge sind im Wesentlichen gerade ausgeführt, wobei eine Ecke bzw. Kante zwischen dem oberen bzw. unteren Übergang ebenfalls verrundet sein kann. Die Ringaußenfläche wird hier im Wesentlichen durch einen Kreisbogen und zwei tangentialen Strecken, die als obere bzw. untere Übergangstangente bezeichnet werden können, gebildet.

Bei einer weiteren beispielhaften Ausführungsform des Abstreifrings liegen die Stellen, an denen der obere bzw. untere Übergang jeweils in die obere bzw. untere Flanke übergehen in Axialrichtung übereinander, bzw. weisen den gleichen Radialabstand von der axialen Symmetrieachse auf.

Bei einer anderen beispielhaften Ausführungsform des Abstreifrings ist jeweils ein unterer und ein oberer Spiralübergang zwischen dem Krümmungsradius R und der unteren Flanke bzw. der oberen Flanke vorgesehen, wobei die Spiralübergänge jeweils glatt und stetig in die Krümmung R bzw. die obere / untere Flanke übergehen. Diese Ausführung gestattet einen gleichmäßigeren Übergang zwischen der Krümmung der Lauffläche und den Kolbenringflanken als es mit geraden Abschnitten möglich wäre.

Gerade Spiralübergänge können eine verbesserte Strömung des abgestreiften Öls in Richtung des Kolbenringnutgrundes ermöglichen. Ein Spiralübergang betrifft hier einen Schnitt in Axialrichtung. Ein Spiralübergang ist dabei im Schnitt als Spiralkurve bevorzugt als hyperbolische Spiralkurve ausgeführt. Die Übergänge sind konvex ausgeführt und gehen bevorzugt stetig und glatt in den Krümmungsradius R und in die Flankenflächen über.

Bei einer zusätzlichen beispielhaften Ausführungsform des Abstreifrings ist der Abstreifring ein unterer Abstreifring eines dreiteiligen Kolbenrings. Bei einer zusätzlichen beispielhaften Ausführungsform des Abstreifrings ist der Abstreifring ein oberer Abstreifring eines dreiteiligen Kolbenrings. Bei einer zusätzlichen beispielhaften Ausführungsform des Abstreifrings ist der Abstreifring ein unterer und oberer Abstreifring eines dreiteiligen Kolbenrings, wobei dieser Abstreifring an beiden Positionen eingesetzt werden kann.

Gemäß eines weiteren Aspekts wird eine beispielhafte Ausführungsform eines dreiteiligen Ölabstreifrings bereitgestellt, wobei jeweils ein oberer Abstreifring und eine unterer Abstreifring verwendet werden, wie sie vorstehend beschrieben sind, wobei die Abstreifringe durch eine Expanderfeder auf Abstand gehalten und radial nach außen gedrückt werden.

Bei einer beispielhaften Ausführungsform des dreiteiligen Ölabstreifrings werden jeweils gleiche Ölabstreifringe wie sie vorstehend beschrieben sind wurden eingesetzt.

Bei einer weiteren beispielhaften Ausführungsform des dreiteiligen Ölabstreifrings ist ein oberer Abstreifring mit den zwei Krümmungsradien und der dazwischenliegenden Tangentialstrecke wie er vorstehend beschrieben ist eingesetzt während ein unterer Abstreifring mit einem Krümmungsradius und zwei geraden oder spiralförmigen Übergängen wie vorstehend beschrieben eingesetzt wird. Hier ist bemerkenswert, dass beide Ringe jeweils entgegengesetzt twisten. Zusätzlich liegen bei dieser Ausführung die Kontaktpunkte bzw. -linien der Abstreifringe dichter zusammen als ein Abstand der jeweiligen Mittenebenen der Abstreifringe.

Bei einer weiteren beispielhaften Ausführungsform des dreiteiligen Ölabstreifrings ist die Expanderfeder als MF-Feder ausgeführt. Gerade MF-Expanderfedern gestatten einen besonders guten Öldurchgang in Radialrichtung, da die MF-Expanderfeder im Vergleich zu SS50 und MD Expanderfedern nur einen geringen Teil des Spalts zwischen dem oberen und dem unteren Ölabsteifring abdecken.

Im Folgenden wird die vorliegende Erfindung anhand von Darstellungen bevorzugter Ausführungen beschrieben.

Figur 1 zeigt einen herkömmlichen Abstreifring in einer Schnittansicht.

Figur 2 zeigt eine erste Ausführungsform eines erfindungsgemäßen Abstreifrings in einer Schnittansicht.

Figur 3 zeigt einen herkömmlichen dreiteiligen Ölabstreifring in einer Schnittansicht.

Figur 4 zeigt eine zweite Ausführungsform eines erfindungsgemäßen Abstreifrings in einer Schnittansicht.

Figur 5 zeigt eine dritte Ausführungsform eines erfindungsgemäßen Abstreifrings in einer Schnittansicht.

Figur 6 zeigt einen dreiteiligen Ölabstreifring mit erfindungsgemäßen Abstreifringen in einer Schnittansicht.

Figur 7 zeigt einen dreiteiligen Ölabstreifring mit erfindungsgemäßen Abstreifringen in einer Schnittansicht.

Die Darstellungen sind schematische und nichtmaßstabgerecht. Sowohl in der Beschreibung als auch in den Figuren werden gleiche oder ähnliche Bezugszeichen verwendet, um auf gleiche oder ähnliche Komponenten oder Elemente Bezug zu nehmen.

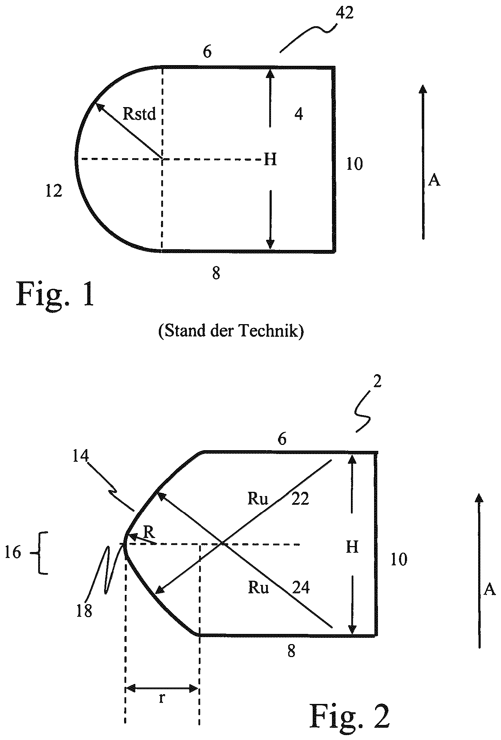

Figur 1 zeigt einen herkömmlichen Abstreifring 42 in einer Schnittansicht. Der Abstreifring umfasst einen Ringkörper 4, der oben von einer oberen Flanke oder Flankenfläche 6 und unten von einer unteren Flankenfläche 8 begrenzt ist. Die Außenkontur des Rings weist einen einheitlichen Krümmungsradius $R_{sdt}$ auf. Der Krümmungsradius bildet die Lauffläche 12 des Abstreifrings. Der Abstand der oberen und unteren Flankenflächen definiert dabei die Höhe H des Abstreifrings. Der einheitliche Krümmungsradius $R_{sdt}$ beträgt dabei genau die Hälfte der Höhe H des Abstreifrings. Die Abstreifeigenschaften dieses Rings lassen sich durch eine Veränderung der Höhe des Rings, sowie des Materials und vor allem der radialen Dicke sowie den Eigenschaften einer eingesetzten Expanderfeder beeinflussen. Die Abstreifringe nach dem Stand der Technik haben einen zur Zylinderinnenfläche gerichteten, grundsätzlichen halbkreisförmigen, entsprechenden Außenradius Rsdt, der der Hälfte der Höhe H entspricht.

Figur 2 zeigt eine erste Ausführungsform eines erfindungsgemäßen Abstreifrings in einer Schnittansicht. Der Abstreifring 2 umfasst einen Ringkörper 4, der oben von einer oberen Flanke oder Flankenfläche 6 und unten von einer untern Flankenfläche 8 begrenzt ist. Die Höhe H ist auch hier als der Abstand zwischen den Flankenflächen definiert. Die Ringaußenseite 12 umfasst im Schnitt entlang der Axialrichtung und durch die axiale Symmetrieachse eine Ringaußenkontur 14. Die Ringaußenkontur 14 bildet eine Lauffläche 16, die einen Krümmungsradius R aufweist, der deutlich kleiner ist als die Höhe H. Der Krümmungsradius ist um einen Faktor zwischen 3,5 bis 4,5 kleiner als die Höhe H des Abstreifrings 2. Die Krümmung mit dem Radius R der Lauffläche 16 geht stetig und glatt in den Übergang 20 zwischen der Krümmung R und der oberen Flanke und dem Übergang 22 zwischen der Krümmung R und der unteren Flanke über. Die jeweiligen Krümmungsradien der Übergänge 20 und 22 können dabei viel größer ausfallen als die Höhe H. Es ist ebenfalls vorgesehen, Kanten die zwischen den Übergängen 20 und 22 und den Flanken 6, 8 auftreten können, zu verrunden. Insgesamt stellt sich die Ringaußenfläche als eine Kombination von drei Radien dar, dem Krümmungsradius R der Lauffläche, die oben/ unten in die Übergänge 20, 22 mit den Übergangs-Krümmungsradien $R_u$ übergehen. Der radial äußerste Stelle bzw. Pivotpunkt 18 der Ringaußenkontur der Lauffläche 16 bildet den Anlagepunkt der Ringaußenkontur 14. Der Anlagepunkt bildet bei dem fertigen Abstreifring 2 dann eine Anlagelinie. Diese Laufflächenkontur ist für einen reduzierten Ölverbrauch optimiert.

Bei dem dargestellten Abstreifring weist der Bereich, der an der Zylinderinnenwand anliegen soll, einen deutlich kleineren Krümmungsradius auf als bei Abstreifringen des Standes der Technik. Der Krümmungsradius R soll hier im Bereich von 0,08 bis 0,12mm liegen. Die Übergangsbereiche 20 und 22 beträgt vorzugsweise 0,75mm. Der Abstand r der die radiale Erstreckung der Ringaußenfläche 12 beschreibt beträgt zwischen 0,1 bis 0,2mm, und soll in der Figur 2 0,15mm betragen. Die Außenkontur des Abstreifrings ist spiegelsymmetrisch gegenüber einer Ebene die auf halber Höhe H durch den Abstreifring verläuft. Die neue Ringaußenkontur zeigte sowohl in der Simulation als auch unter Einsatzbedingungen Vorteile bezüglich des Ölverbrauchs.

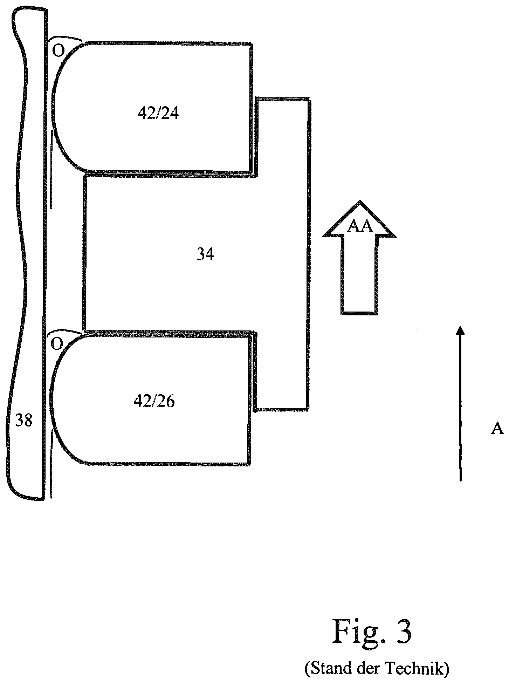

Figur 3 zeigt einen herkömmlichen dreiteiligen Ölabstreifring 44 in einer Schnittansicht. Der herkömmliche Ölabstreifring 44 weist einen oberen Abstreifring 24 und einen unteren Abstreifring 26 auf. Beide Abstreifringe sind als herkömmliche Abstreifringe 42 ausgeführt. Beide herkömmliche Abstreifringe 42 werden von einer Expanderfeder 34 nach außen gegen eine Zylinderinnenwand 38 gedrückt. Die Expanderfeder 34 stellt ebenfalls sicher, dass die beiden herkömmlichen Abstreifringe 42 einen ausreichenden Abstand in Axialrichtung beibehalten. Es sind bisher 3-teilige Ölabstreifringe auf dem Markt die verschiedene Abstreifringe verwenden, bisher werden jedoch als oberer Abstreifring und als unterer Abstreifring Ringe verwendet, die die gleiche Außenkontur aufweisen, also beide den gleichen Krümmungsradius aufweisen. Beide Abstreifringe streifen Öl auf der Innenseite des Zylinders 38 auf gleiche Weise ab. Hier ist der Abstreifvorgang in einer Aufwärtsbewegung AA dargestellt. Da der Abstreifring symmetrisch ausgeführt ist entspricht die Darstellung der Situation bei einer Abwärtsbewegung, dh genau der, die bei einer Aufwärtsbewegung auftreten sollte.

Es ist das Ziel eine verbesserte Ölabstreifwirkung und/oder ein Minimum der Reibverluste im Vergleich zu einem herkömmlichen Ölabstreifring mit identischen oberen und unteren Abstreifringen zu erreichen. Ein weiterer wichtiger Aspekt besteht darin, die Entstehung und Ablagerung von Ölkohle im Bereich einer Expanderfeder zu vermeiden oder zumindest deutlich zu verringern. Weiterhin ist es wünschenswert die Reibung, die durch einen Ölabstreifring erzeugt wird ohne bedeutende Einbußen beim Ölverbrauch zu erreichen.

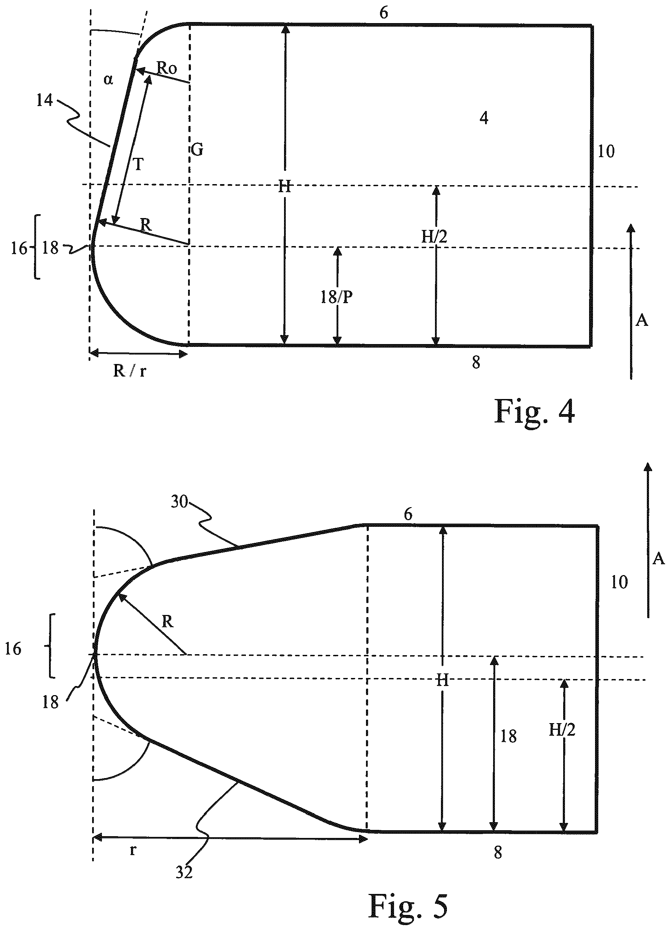

Figur 4 zeigt eine zweite Ausführungsform eines erfindungsgemäßen Abstreifrings in einer Schnittansicht. Im Gegensatz zu dem Abstreifring von Figur 1 ist der Ring von Figur 4 nicht bezüglich einer Ebene symmetrisch, die sich auf der halben Höhe H durch den Kolbenring erstreckt. Figur 4 zeigt eine Querschnittansicht durch den Abstreifring 2 mit dem Ringkörper 4, der oben von einer oberen Flanke oder Flankenfläche 6 und unten von einer unteren Flankenfläche 8 begrenzt ist. Auf der Innenseite ist der Ringkörper durch eine Ringinnenfläche 10 begrenzt. Der Ringinnenfläche 10 liegt die Ringaußenseite 12 gegenüber. Die Ringaußenseite 12 bildet die Ringaußenkontur 14. An der Ringaußenkontur 14 bildet die Krümmung R eine Lauffläche 16. Die Krümmung R geht stetig und glatt in die untere Flankenfläche 8 über, bzw. die untere Flankenfläche bildet zu dem Krümmungsradius R eine Tangente. Die Krümmung erstreckt sich über mehr als 90° sodass die radial äußerste Stelle bzw. Pivotpunkt 18 der Ringaußenkontur der Lauffläche 16 durch die Krümmung R gebildet wird. Der Pivotpunkt 18 befindet sich dabei im Abstand R über der unteren Abstreifringflanke. Die Krümmung R der Kontur geht dann direkt stetig und glatt in eine gerade Strecke über die bei dem Abstreifring eine Kegelstumpfmantelfläche bildet. Die tangentiale Strecke wiederum geht in einen oberen Krümmungsradius Ro über, der sowohl zu der tangentialen Strecke als auch zu der Schnittlinie der oberen Flanke tangential ist. Dier Radius Ro ist dabei kleiner als der Radius R. Die tangentiale Strecke ist hier eine gemeinsame Tangente T zu den Krümmungsradien R und Ro. In der Ausführung liegen die Mittelpunkte der Krümmungsradien R und Ro in Axialrichtung genau übereinander, sodass die Kegelstumpfmantelfläche nach oben hin zusammenläuft.

Der Pivot-Punkt 18 des asymmetrisch konischen Rails bzw Abstreifrings ist in Richtung unterer Flanke versetzt. Er liegt auf 20 bis 40% der axialen Höhe H. Damit entspricht der Wert des Krümmungsradius R einem Fünftel bis einem Zweieinhalbtel der Höhe H. Die axiale Höhe des Abstreifrings bleibt im Bereich von 0,3 bis 0,5mm. Weiterhin wird die Außenkontur des Abstreifrings durch die Maße des Krümmungsradius R und den Winkel $\alpha$ bestimmt. Der Winkel $\alpha$ ist der Kegelwinkel der Kegelstumpffläche bzw. der Winkel der gemeinsamen Tangente der Krümmungsradien R und Ro zu der Axialrichtung. Der Radius wird hier zwischen 0,15 und 0,25mm und der Winkel $\alpha$ zwischen 5 und 20° betragen. Der Radius Ro kann zwischen 0,1 und 0,2mm betragen. Dieser Abstreifring soll als oberer Abstreifring eingesetzt werden.

Figur 5 zeigt eine dritte Ausführungsform eines erfindungsgemäßen Abstreifrings in einer Schnittansicht. Hier wird ein Abstreifring mit einer Lauffläche 16 bereitgestellt, die im Bereich des Pivotpunktes 18 symmetrisch ballig ausgeführt ist. Der Pivotpunkt befindet sich jedoch oberhalb einer Mittelebene H/2. Der Pivotpunkt 18 befindet sich von der unteren Flanke aus betrachtet auf einer axialen Höhe zwischen 55 und 75% der Höhe H. Der Radius R der die Balligkeit der Lauffläche definiert, kann liegt im Bereich zwischen 0,05 und 0,15mm. Der Krümmungsradius R geht nach oben und unten jeweils tangential in die obere Übergangstangente 30 und die untere Übergangstangente 32 über. Die Übergangstangenten können dabei Winkel zwischen 30° und 75° zur Axialrichtung aufweisen. Die Übergangstangenten 30 und 32 gehen mit einem Knick in die obere bzw. untere Flanke über, die verrundet ausgeführt sein kann. Die Kontur des Abstreifrings lässt eine verringerte Reibung erwarten.

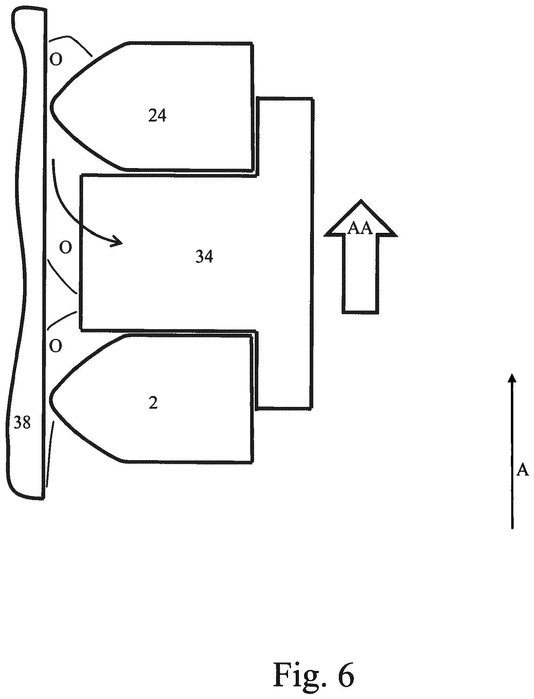

Figur 6 zeigt einen dreiteiligen Ölabstreifring mit erfindungsgemäßen Abstreifringen in einer Schnittansicht. Der dreiteilige Ölabstreifring umfasst einen oberen Abstreifring 24 der gemäß der Ausführung der Figur 2 ausgeführt ist. Der dreiteilige Ölabstreifring umfasst einen unteren Abstreifring 23, der gemäß der Ausführung der Figur 2 ausgeführt ist. Dieser erfindungsgemäße Ölabstreifring setzt zwei gleiche Abstreifringe mit zwei gleichen Abstreifringkonturen in einem Ölabstreifring ein. Der obere Abstreifring 24 und der untere Abstreifring 26 werde durch eine Expanderfeder 34 die als eine MF-Mäanderfeder ausgeführt ist radial nach außen gegen eine Zylinderinnenfläche 38 gedrückt. Die MF-Mäanderfeder 34 hält einen definierten Axialabstand zwischen oberen Abstreifring 24 und dem unteren Abstreifring 26 aufrecht. In der Figur 6 bewegt sich der Ölabstreifring in Axialrichtung aufwärts wie es durch den Pfeil AA angedeutet ist.

Der oberen Abstreifring erzeugt durch die teilweise konische Lauffläche 16 einen "Oil Catching Effect" bei dem der obere Abstreifring 24 auf dem Öl aufschwimmt und das Öl zwischen die Abstreifringe 24, 26 gelangt. Der obere Abstreifging 24 kann durch den Übergangsbereich verhindern, dass sich das Öl vor dem Abstreifring staut und sich oben zwischen der oberen Abstreifringflanke 6 und einer oberen Kolbenringnutflanke sammelt. Der unten angeordnete Abstreifring mit einer symmetrisch balligen Lauffläche verhindert, dass das Öl O den Ringzwischenraum nach unten verlässt.

In dieser Ausführung wir kontinuierlich Öl zwischen dem oberen Abstreifring 24 und dem unteren Abstreifring 26 und durch die MF-Expanderfeder transportiert, was eine Verkokung der Feder verhindern soll.

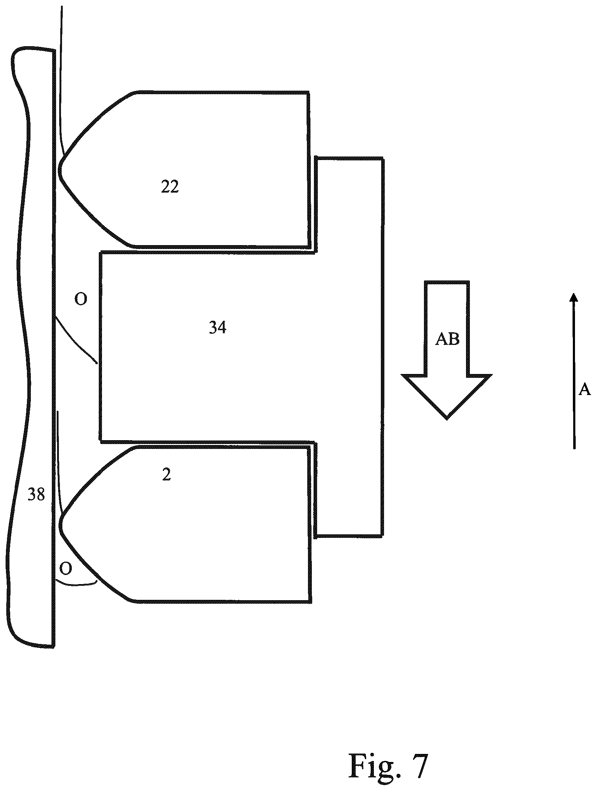

Figur 7 zeigt einen dreiteiligen Ölabstreifring der Figur 6 bei einer Bewegung in Axialrichtung abwärts wie es durch den Pfeil AA angedeutet ist.

Der obere Abstreifring erzeugt durch die Lauffläche 16 einen dünnen Ölfilm, da der obere Abstreifring 24 nicht auf dem Ölfilm aufschwimmt und den größten Teil das Öl O vor sich her schiebt. Der obere Abstreifring weist durch unterschiedlich dicke Ölschichten eine größere Abstreifleistung auf als der untere Abstreifring 26. Die Differenz der Abstreifleistungen wird zwischen dem oberen Abstreifring und dem unteren Abstreifring in Richtung Nutgrund (nicht dargestellt) abgeleitet.

Grundsätzlich wird hier bei einem dreiteiligen Ölabstreifring ein oberer und unterer Abstreifring mit einer jeweils symmetrisch balligen Lauffläche eingesetzt. Durch diese Anordnung wird das Schmieröl auf der Zylinderlauffläche im Aufwärtshub eingesammelt und durch den "Oil Catching Effect" zwischen den oberen Abstreifring und dem unteren Abstreifring gesammelt und in Richtung Kolbenringnutgrund abgeführt. Das abgestreifte Öl kann durch entsprechende Kanäle im Kolben zurück in das Kurbelgehäuse gelangen. Das Prinzip basiert auf einer Abstreifleistung des oberen Abstreifrings 24, dessen Abstreifleistung bei einer Abwärtsbewegung über der des unteren Abstreifrings liegt. Das wird dadurch erreicht, dass von einer dickeren Ölschicht mehr Öl abgestreift werden kann. Damit sammelt sich abgestreiftes Öl bei einer Abwärtsbewegung zwischen den Abstreifringen 24 und 26. Die Abstreifleistung des oberen Abstreifringes wird dabei bevorzugt unter die des unteren Abstreifrings verringert. Dies führt dazu, dass auch bei einer Aufwärtsbewegung von dem in Bewegungsrichtung "hinteren" Abstreifring mehr Öl abgestreift wird. Insgesamt wird so sowohl bei einer Aufwärtsbewegung AA als auch bei einer Abwärtsbewegung Öl zwischen den Abstreifringen 24, 26 gefangen und in Richtung Nutgrund und weiter in das Kurbelgehäuse transportiert.

Es werden beide Abstreifringe nach Figur 2 eingesetzt.

Bezugszeichenliste

| | |
|---|---|
| 2 | Abstreifring |
| 4 | Ringkörper |
| 6 | obere Flanke bzw. Flankenfläche |
| 8 | untere Flanke bzw. Flankenfläche |
| 10 | Ringinnenfläche |
| 12 | Ringaußenfläche, |
| 14 | Ringaußenkontur, |
| 16 | Lauffläche |
| 18 | radial äußerste Stelle bzw. Pivotpunkt der Ringaußenkontur der Lauffläche |
| 20 | Übergang zwischen dem Krümmungsradius R und der oberen Flanke |
| 22 | Übergang zwischen dem Krümmungsradius R und der unteren Flanke |
| 24 | oberer Abstreifring |
| 26 | unterer Abstreifring |
| 28 | dreiteiliger Kolbenring / Ölabstreifring |
| 30 | obere Übergangstangente |
| 32 | untere Übergangstangente |
| 34 | Feder / Expanderfeder |
| 36 | MF-Feder / MF-Expanderfeder |
| 38 | Zylinderinnenfläche |
| 42 | Herkömmlicher Abstreifring |
| 44 | Bewegungsrichtung des Kolbens nach oben |
| 46 | Bewegungsrichtung des Kolbens nach unten |
| | |
| A | Axialrichtung |
| AA | Bewegung in Axialrichtung aufwärts |
| AB | Bewegung in Axialrichtung abwärts |
| G | Gerade die parallel zu der Axialrichtung verläuft |
| H | Höhe des Ringkörpers |
| O | Öl |
| P | Höhe der radial äußersten Stelle der Ringaußenkontur der Lauffläche |
| r | radiale Erstreckung der Ringaußenfläche |
| R | Krümmungsradius der Lauffläche |
| Ro | Krümmungsradius der in die obere Flanke übergeht |
| Ru | Übergangs-Krümmungsradius Ru |
| Rsdt | Krümmungsradius einer Lauffläche eines herkömmlichen Abstreifrings |
| T | Gemeinsame Tangente der Krümmungsradien |

R und Ro

α  Kegelwinkel bzw. Winkel der gemeinsamen Tangente zur Axialrichtung

**Patentansprüche**

1. Dreiteiliger Ölabstreifring (28), mit einem oberen Abstreifring (2) und einem unteren Abstreifring (2), wobei die Abstreifringe (2) durch eine Expanderfeder (34) auf Abstand gehalten und radial nach außen gedrückt werden, wobei der obere und der untere Abstreifring (2) umfassen:

   einen Ringkörper (4) mit einer oberen Flanke (6), einer unteren Flanke (8), einer Ringinnenfläche (10) und einer Ringaußenfläche (12), die im Schnitt in Axialrichtung (A) eine Ringaußenkontur (14) aufweist,
   wobei der Ringkörper (4) eine Höhe H aufweist, die in Axialrichtung (A) gesehen dem größten Abstand der oberen Flanke (6) zu der unteren Flanke (8) entspricht;
   wobei die Ringaußenkontur (14) eine Lauffläche (16) bildet, die einen Krümmungsradius R aufweist, der um einen Faktor zwischen 1,5 bis 6, bevorzugt zwischen 3 bis 5 und weiter bevorzugt zwischen 3,5 bis 4,5, mal kleiner ist als die Höhe H des Abstreifrings (2), wobei der Abstreifring gegenüber einer Ebene symmetrisch ist, die sich entlang der halben Höhe H des Abstreifrings erstreckt, wobei eine radial äußerste Stelle (18) der Ringaußenkontur (14) der Lauffläche (16) sich auf der halben Höhe H/2 des Abstreifrings (2) befindet,
   **dadurch gekennzeichnet, dass** ein oberer und unterer Übergang (22) zwischen der Krümmung mit Krümmungsradius R und der unteren Flanke (8) vorgesehen ist, der Querschnitt konvex ausgeführt ist und stetig und glatt in die Krümmung übergeht,
   wobei der obere und untere Übergang (22) zwischen dem Krümmungsradius R und der unteren Flanke (8) in einem Querschnitt in Axialrichtung als Spiralkurve bevorzugt als hyperbolische Spiralkurve ausgeführt sind, die im Querschnitt konvex ausgeführt ist und stetig und glatt in die Krümmung R und in die Flanke (8) übergehen, und
   wobei die Expanderfeder (34) als MF-Feder (36) ausgeführt ist.

2. Dreiteiliger Ölabstreifring (28) nach Anspruch 1, wobei die Höhe H des unteren und oberen Abstreifrings (2) zwischen 0,28 mm und

   0,52 mm, bevorzugt zwischen 0,34 mm und 0,46 mm und weiter bevorzugt zwischen 0,38 und 0,42mm beträgt, und wobei der Krümmungsradius R der Lauffläche (16) zwischen 0,06mm und 0,04mm, bevorzugt zwischen 0,08mm und 0,12mm und weiter bevorzugt zwischen 0,09mm und 0,11mm beträgt.

**Claims**

1. Three-part oil scraper ring (28) having an upper scraper ring (2) and a lower scraper ring (2), wherein the scraper rings (2) are held at a distance by an expander spring (34) and are pressed radially outwardly,
   wherein the upper and the lower scraper ring (2) comprise:

   a ring body (4) having an upper flank (6), a lower flank (8), a ring inner surface (10) and a ring outer surface (12) which has a ring outer contour (14) in cross-section in axial direction (A),
   wherein the ring body (4) has a height H which, when viewed in axial direction (A), corresponds to the greatest distance of the upper flank (6) to the lower flank (8),
   wherein the ring outer contour (14) forms a running surface (16) which has a radius of curvature R which is smaller than the height H of the scraper ring (2) by a factor between 1.5 to 6, preferably between 3 to 5 and further preferably between 3.5 to 4.5, wherein the scraper ring is symmetrical with respect to a plane which extends along the half height H of the scraper ring, wherein a radially outermost position (18) of the ring outer contour (14) of the running surface (16) is located at the half height H/2 of the scraper ring (2),
   **characterized in that**
   an upper and lower transition (22) is provided between the curvature having radius of curvature R and the lower flank (8), the cross-section is designed to be convex and merges continuously and smoothly into the curvature,
   wherein the upper and lower transition (22) between the radius of curvature R and the lower flank (8) in a cross-section in axial direction are designed as spiral curve, preferably as hyperbolic spiral curve which is designed to be convex in cross-section and merges continuously and smoothly into the curvature R and into the flank (8) and
   wherein the expander spring (34) is designed as MF spring (36).

2. Three-part oil scraper ring (28) according to claim 1, wherein the height H of the lower and upper scraper ring (2) is between 0.28 mm and 0.52 mm, preferably between 0.34 mm and 0.46 mm and further preferably between 0.38 and 0.42 mm and wherein the radius of curvature R of the running surface (16) is between 0.06 mm and 0.04 mm, preferably between 0.08 mm and 0.12 mm and further preferably between 0.09 mm and 0.11 mm.

## Revendications

1. Segment racleur d'huile en trois parties (28), comportant un segment racleur supérieur (2) et un segment racleur inférieur (2), dans lequel les segments racleurs (2) sont écartés et sollicités radialement vers l'extérieur par un ressort détendeur (34), dans lequel les segments racleurs supérieur et inférieur (2) comprennent :

   un corps de bague (4) comportant un flanc supérieur (6), un flanc inférieur (8), une surface intérieure de bague (10) et une surface extérieure de bague (12), qui présente en coupe dans la direction axiale (A) un contour extérieur de bague (14),
   dans lequel le corps de bague (4) présente une hauteur H qui, vue dans la direction axiale (A), correspond à la plus grande distance entre le flanc supérieur (6) et le flanc inférieur (8);
   dans lequel le contour extérieur de bague (14) forme une surface de roulement (16) qui présente un rayon de courbure R, qui est d'un facteur compris entre 1,5 à 6, de préférence entre 3 à 5 et plus préférentiellement entre 3,5 à 4,5 fois inférieur à la hauteur H du segment racleur (2),
   dans lequel le segment racleur est en vis à vis d'un plan de symétrie, qui s'étend sur la moitié de la hauteur H du segment racleur, dans lequel un point (18) radialement le plus à l'extérieur du contour extérieur de bague (14) de la surface de roulement (16) se trouve à la moitié de la hauteur H/2 du segment racleur (2),
   **caractérisé en ce qu'**une transition supérieure et inférieure (22) entre la courbure avec le rayon de courbure R et le flanc inférieur (8) est prévue, la section transversale a une configuration convexe et se fond de manière continue et régulière dans la courbure, dans lequel la transition supérieure et inférieure (22) entre le rayon de courbure R et le flanc inférieur (8) sont configurées en coupe transversale dans la direction axiale en tant que courbe en spirale, de préférence en tant que courbe en spirale hyperbolique, qui a une configuration convexe en section transversale et se fond de manière continue et régulière dans la courbure R et dans le flanc (8), et le ressort détendeur (34) est réalisé sous la forme d'un ressort MF (36).

2. Segment racleur d'huile en trois parties (28) selon la revendication 1, dans lequel la hauteur H des segments racleurs inférieur et supérieur (2) est comprise entre 0,28mm et 0,52mm, de préférence entre 0,34mm et 0,46mm et plus préférentiellement entre 0,38 et 0,42mm, et dans lequel le rayon de courbure R de la surface de roulement (16) est compris entre 0,06mm et 0,04mm, de préférence entre 0,08mm et 0,12mm et plus préférentiellement entre 0,09mm et 0,11mm.

42

6

Rstd

4

H

12

10

A

8

**Fig. 1**

(Stand der Technik)

2

14

6

Ru 22

R

16

H

10

18

Ru 24

8

A

r

**Fig. 2**

42/24

34

AA

42/26

38

A

## Fig. 3

(Stand der Technik)

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3833322
- US 2712971 A
- WO 2016038916 A
- JP S5962358 U
- JP 6251850 B
- US 20160076649 A1
- US 20170184198 A1
- EP 3270012 A1
- DE 112015001071 T5
- JP H08159282 A